# EUROPEAN PATENT APPLICATION

(11) **EP 0 602 908 A1**
(43) Date of publication of application: **22.06.1994**
(21) Application number: 93309967.3
(22) Date of filing: 10.12.1993
(51) Int. Cl.: H05B 41/29

(54) **High power factor circuit for powering a load**

(30) Priority: 14.12.1992 US 990401
(71) Applicant: GENERAL ELECTRIC COMPANY, Schenectady, NY 12345 (US)
(72) Inventor: Haas, Kurt William, Chesterland, Ohio 44026 (US)
(74) Representative: Pratt, Richard Wilson

(57) **Abstract**

A power supply circuit with a high power factor includes circuitry for receiving an a.c. voltage from an a.c. power source supplying a.c. input current, and circuitry for generating a rectified voltage from the a.c. voltage. The circuit further includes a filter network coupled to the rectifier circuitry for receiving the rectified voltage and, in response, providing a filtered voltage for powering a load. The filter network comprises at least first and second filter capacitors, first circuit circuitry for placing the filter capacitors in series when the capacitors are being charged from the rectified voltage, and second circuit circuitry for placing each capacitor in a respective parallel discharge path when the capacitors are discharging energy into the load. The first circuit circuitry of the filter network includes a resistor with a resistance value selected to reduce harmonic distortion of the a.c. input current to such an extent that the power factor of the circuit exceeds about 90 percent. The load for the mentioned power supply circuit preferably comprises a low pressure discharge lamp contained within a resonant ballast circuit, and a half-bridge switching network for supplying bi-directional power to the resonant ballast circuit.

## Description

### FIELD OF THE INVENTION

The present invention relates to circuits for providing direct current (d.c.) power to a load, and more particularly to such power supply circuits having a high power factor and compactness.

### BACKGROUND OF THE INVENTION

In the past several years, compact fluorescent lamps using a standard Edison-type screw base have been introduced. These fluorescent lamps may replace standard incandescent lamps with an Edison-type screw base. The fluorescent lamps, however, are more complex than incandescent lamps, and require, for instance, a power supply circuit for converting a.c. supply-line current to a d.c. current used in the power supply circuit.

The power supply circuit for a compact fluorescent lamp of the above-mentioned type must also be sufficiently compact to allow the power supply circuit and lamp to replace standard incandescent lamps having an Edison-type screw base. Such incandescent lamps, to be replaced, are known in the art as A-line lamps.

An additional complexity arises because electric utility companies are increasingly requiring consumers of electric power to use electric loads with a high power factor. An ideal power factor of 100 percent would be achieved where the a.c. input current is in phase with the a.c. voltage and free of harmonic distortion. Power supply circuits supplied with a.c. voltage and current, however, frequently draw a.c. current from the line that deviates substantially from a pure sinusoidal waveform. Such deviation, or harmonic distortion, reduces the circuit's power factor, not infrequently to about 50 percent. It has become an important goal in the industry to achieve a power factor typically in excess of about 90 percent, and in some cases in excess of about 95 percent.

It, accordingly, would be desirable to provide a power supply circuit with both a high power factor and a high degree of compactness.

### SUMMARY OF THE INVENTION

Accordingly, it is an object of the invention to provide a high power factor circuit for powering a load wherein the power supply circuit is compact and wherein such compact circuit can be constructed economically and from readily available electronic components.

The foregoing object is realized by a power supply circuit with a high power factor. In a preferred form, the circuit includes means for receiving an a.c. voltage from an a.c. power source supplying a.c. input current, and means for generating a rectified voltage from the a.c. voltage. The circuit further includes a filter network coupled to the rectifier means for receiving the rectified voltage and, in response, providing a filtered voltage for powering a load. The filter network comprises at least first and second filter capacitors, first circuit means for placing the filter capacitors in series when the capacitors are being charged from the rectified voltage, and second circuit means for placing each capacitor in a respective parallel discharge path when the capacitors are discharging energy into the load. The first circuit means of the filter network includes a resistor with a resistance value selected to reduce harmonic distortion of the a.c. input current to such an extent that the power factor of the circuit exceeds about 90 percent.

Preferably, the load for the mentioned power supply circuit comprises a low pressure discharge lamp contained within a resonant ballast circuit, and a half-bridge switching network for supplying bi-directional power to the resonant ballast circuit.

The above-described objects and further advantages of the invention will become apparent from the following description taken together with the accompanying drawings.

### BRIEF DESCRIPTION OF THE DRAWING

Fig. 1 is a circuit diagram, partially in block form, showing a power supply circuit that uses a resistor R to achieve a compact, high power factor circuit.

Figs. 2A and 2B show contrasting waveforms of the circuit of Fig. 1 with resistor R respectively having 0 and 330 ohms resistance.

Fig. 3 shows a perspective view of a typical, compact fluorescent lamp that may be powered from the power supply circuit of Fig. 1.

Fig. 4 shows a preferred half-bridge load circuit for a compact fluorescent lamp that may be used in the circuit of Fig. 1.

### DETAILED DESCRIPTION OF THE PREFERRED EMBODIMENTS

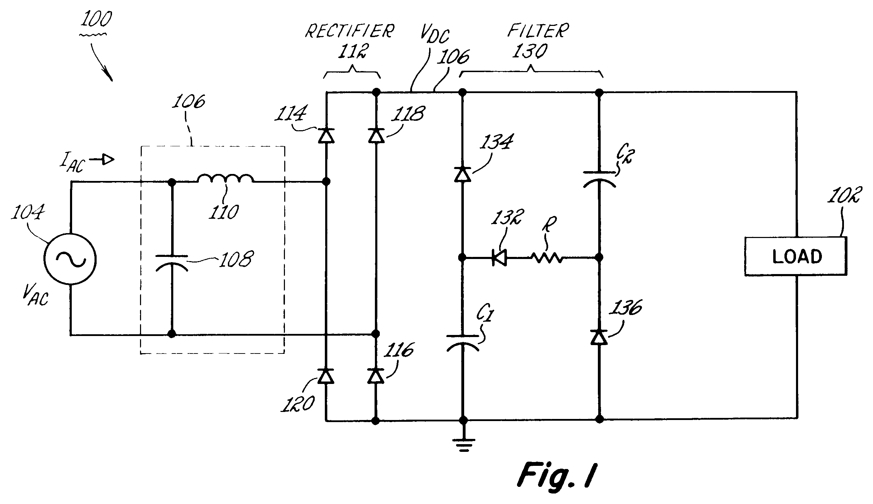

Fig. 1 shows a power supply circuit 100 for powering a load 102 with a high power factor. Alternating current (a.c.) line power is supplied to circuit 100 by an a.c. power source 104, providing an a.c. current I_{AC} at an a.c. voltage V_{AC}. A.c. current I_{AC} passes through a conventional electromagnetic interference (EMI) filter 106 having a capacitor 108 and an inductor 110. A.c. current I_{AC} is then rectified by a full-wave rectifier 112, for instance, to provide a d.c. voltage V_{DC}. Full-wave rectifier 112 conventionally comprises, as shown, a full-wave bridge including p-n diodes 114 and 116, which conduct current during a positive half cycle of a.c. voltage V_{AC}; and p-n diodes 118 and 120, which conduct current during a negative half cycle of a.c. voltage V_{AC}.

A filter network 130 filters d.c. voltage V_{DC}, to provide a filtered voltage for powering a load 102. Filter network 130 includes at least two filter capacitors C₁ and C₂. Capacitors C₁ and C₂ are arranged to be charged in series from d.c. voltage V_{DC} in a charging path that includes resistor R and a p-n diode, or other one-way current valve, 132. Filter network 130 further includes p-n diodes, or other one-way current valves, 134 and 136. Diode 134 provides a discharge path for capacitor C₁, while diode 136 provides a parallel discharge path for capacitor C₂. The charging and discharging modes of capacitors C₁ and C₂ are further described below.

The purpose of resistor R in the series charging path for capacitors C₁ and C₂ is to reduce the rate of charging of capacitors C₁ and C₂ in such a way, detailed below, as to reduce harmonic distortion of a.c. input current I_{AC} and thereby improve power factor of power supply circuit 100.

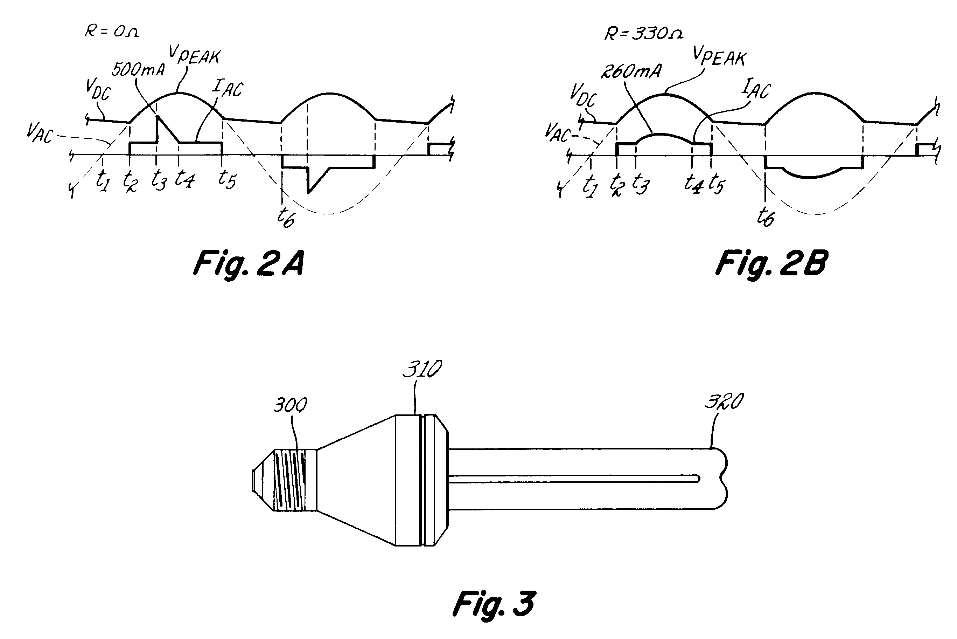

The operation of power supply circuit 100 in Fig. 1 is now explained in connection with the waveforms of Figs. 2A and 2B. In each of these figures, the load is assumed to draw an average of 20 watts of power at a continuous current of about 170 milliamps; this type of power and current draw characterizes a fluorescent lamp with a resonant-type ballast (or power supply circuit), for instance.

In Fig. 2A, a.c. current I_{AC} and d.c. voltage V_{DC} are shown in solid lines; a.c. voltage V_{AC}, in contrast, is shown in dashed lines. In the interval between time t₁ and time t₂, capacitors C₁ and C₂ are discharging in parallel and exclusively supplying load 102 with current during this interval. This is because a.c. voltage V_{AC} during this interval is less than the voltage on then-parallel connected capacitors C₁ and C₂, which is about ½ of a peak voltage V_{PEAK} of d.c. voltage V_{DC}. Peak voltage V_{PEAK} is typically 170 volts for an a.c. input voltage V_{AC} of 120 volts root mean square (r.m.s.). Rectifier diodes 114 and 116 at this time are back biased and unable to conduct.

Starting at time t₂, d.c. voltage V_{DC} rises above the voltage on then-parallel capacitors C₁ and C₂, back biasing filter-network diodes 134 and 136 and disconnecting the capacitors from line 106.

At time t₃, d.c. voltage V_{DC} rises above the sum of the voltages on capacitors C₁ and C₂. At this point, filter-network diode 132 becomes forward biased, completing a series circuit through which capacitors C₁ and C₂ serially charge from d.c. voltage V_{DC}. With resistor R being zero ohms, a rapidly increasing and then tapering current spike occurs between times t₃ and t₄. The current spike typically reaches 500 milliamps for a load 102 drawing an average of 20 watts of power.

The occurrence of such a sharp current spike of a.c. current I_{AC}, drawn from a.c. source 104, causes considerable harmonic distortion of a.c. current I_{AC}, and thereby results in a low power factor of typically about 85 percent. It would be desirable to smooth the current spike so as to minimize harmonic distortion of a.c. current I_{AC} and thereby increase circuit power factor, but without bulky circuitry that would be incompatible with ballasting a compact fluorescent lamp, for instance.

In the interval between times t₄ and t₅, d.c. voltage V_{DC} is again below the voltage of serially connected capacitors C₁ and C₂, which is about ½ of peak voltage V_{PEAK}; accordingly, filter-network diodes 134 and 136 are again back biased and the capacitors disconnected from line 106.

At time t₅, d.c. voltage V_{DC} falls below the voltage on the then-parallel capacitors C₁ and C₂, which is about ½ of peak voltage V_{PEAK}. Capacitors C₁ and C₂ then exclusively provide current to load 102 until time t₆, occurring during a negative half cycle of a.c. voltage V_{AC}. Time t₆ corresponds to previous time t₂ in the preceding positive waveform of a.c. voltage V_{AC}.

It has been discovered by the present inventor that, without the use of bulky circuitry, the sharp current spike of Fig. 2A can be replaced with a smoother current shape resulting in a high power factor of typically 97 per cent. Thus, referring to Fig. 2B, where resistor R has a 330 ohm value, and load 102 draws an average of about 20 watts of power, the smoother (and longer) current waveform shown between times t₃ and t₄ occurs. Apart from this difference, the circuit of Fig. 2B operates in the same general manner as already described in connection with Fig. 2A. An increase in power factor for the circuit of Fig. 1 can be realized by increasing the value of resistance R, which makes the waveform between times t₃ and t₄ smoother.

In the smoother current waveform of Fig. 2B between times t₃ and t₄, the peak of a.c. current I_{AC} reaches only about 260 milliamps, compared with the nearly doubled level of 500 milliamps as shown in Fig. 2A. As a result, a.c. current I_{AC} conforms more closely to a sinusoidal waveform, i.e., it has less harmonic distortion. This improves the power factor of circuit 100 to the typical 97 percent level already mentioned.

Beneficially, resistor R can be compactly embodied as a low power resistor of about ½ watt or less where load 102 draws less than an average of about 40 watts of power and can be embodied as a power resistor of about ¼ watt or less where the load draws less than an average of about 20 watts. Accordingly, power supply circuit 100 of Fig. 1 is suitable for applications requiring extreme compactness, such as a ballast circuit for a compact fluorescent lamp shown in Fig. 3. In Fig. 3, the ballast circuit (not shown) is contained within a standard Edison-type screw base 300 and a further ballast-containing member 310, which supports lamp 320.

It has additionally been discovered by the present inventor that the heat from resistor R can typically be dissipated without the use of any dedicated and usually bulky heat sink. Rather, heat from resistor R can typically be dissipated merely by conduction from the resistor leads to a printed circuit pattern on a printed circuit board, in addition to radiation from the outer surface of the resistor to surrounding air. This has been found effective on typical printed circuit boards, such as those made with a glass-reinforced construction. On the other hand, the use of a small dedicated heat sink (not shown) whose heat removal capacity is less than about that of the mentioned non-dedicated structure (e.g., a small wire wrapped around one of the resistor leads), is considered an insubstantial deviation from the present discovery.

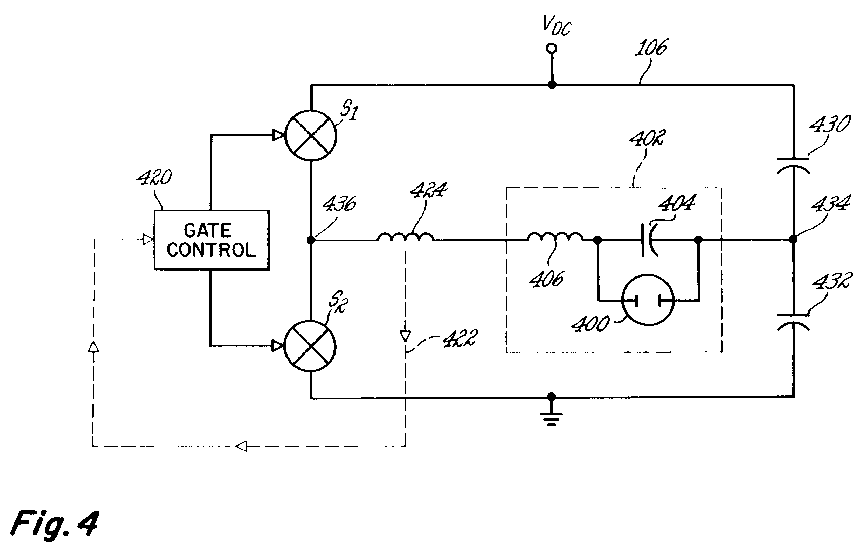

Fig. 4 shows a preferred configuration of load 102 of Fig. 1 that includes a compact fluorescent lamp 400. Lamp 400 is contained within a resonant circuit 402, which also includes a resonant capacitor 404 in parallel with lamp 400, and a resonant inductor 406. The Fig. 4 load circuit comprises a half-bridge circuit including switches S₁ and S₂ that are alternately switched on and off in response to a control circuit 420 for controlling the "gates" or other control terminals of switches S₁ and S₂. Gate control circuit 420 preferably derives its power from resonant circuit 402. Accordingly, gate control circuit 420 is linked by a transformer (not shown) to a primary winding 424 of such transformer via a link 422. Further details of gate control circuit 420 are contained in co-pending U.S. Patent Application Serial No.07/766,489, entitled "Electronic Ballast Arrangement For A Compact Fluorescent Lamp", by L.R. Nerone. The foregoing application is assigned to the instant assignee, and is hereby incorporated by reference and corresponds to EP-A-0534727 (92308648.2).

In known manner, half-bridge capacitors 430 and 432 serve to keep the voltage at their common node 434 at about one half the d.c. voltage V_{DC} on conductor 106. Switches S₁ and S₂ alternately connect their common node 436 to d.c. voltage V_{DC} and then to ground, and back to d.c. voltage V_{DC}, and so on. This switching action causes a bi-directional current to flow through resonant circuit 402, including fluorescent lamp 400.

A typical value for capacitor 404 is 2.2 nanofarads; for inductor 406, 2.2 millihenries; for winding 422, 22 nanohenries; and for half-bridge capacitors 430 and 432, 0.15 microfarads. Further details of the load circuit of Fig. 4 are contained in the above-referenced co-pending U.S. patent application of LJ. Nerone. With the circuit values are as mentioned in the forgoing paragraph, the load circuit of Fig. 4 functions as a relatively constant current sink of about 170 milliamps for an average load of 20 watts.

From the foregoing, it will be appreciated that the present invention provides a high power factor circuit for powering a load wherein the power supply circuit is compact. The power supply circuit, further, can be constructed economically and with readily available electronic components.

While the invention has been described with respect to specific embodiments by way of illustration, many modifications and changes will occur to those skilled in the art. It is, therefore, to be understood that the appended claims are intended to cover all such modifications and changes as fall within the true spirit and scope of the invention.

## Claims

1. In a discharge lamp, the power supply circuit with high power factor, comprising:
(a) means for receiving an a.c. voltage from an a.c. power source supplying a.c. input current;
(b) means for generating a rectified voltage from the a.c. voltage; and
(c) a filter network coupled to said rectifier means for receiving said rectified voltage and, in response, providing a filtered voltage for powering a load;
(d) said filter network comprising:
(i) at least first and second filter capacitors;
(ii) first circuit means for placing said filter capacitors in series when said capacitors are being charged from the rectified voltage; and
(iii) second circuit means for placing each capacitor in a respective parallel discharge path when said capacitors are discharging energy into said load;
(e) said first circuit means of said filter network including a resistor with a resistance value selected to reduce harmonic distortion of the a.c. input current to such an extent that the power factor of the circuit exceeds about 90 percent.

2. The power supply circuit of claim 1, wherein said first circuit means comprises a one-way current valve interposed between said first and second capacitors and poled in such direction as to allow charging current from the rectified voltage to be serially conducted through both said capacitors.

3. The power supply circuit of claim 1, wherein said second circuit means comprises first and second one-way current valves respectively connected in circuit with respective ones of said first and second capacitors and poled in such direction as to allow parallel discharge of said capacitors into said load.

4. The power supply circuit of claim 1, wherein the power supply circuit is substantially free of any heat-sinking structure for said resistor other than leads of said resistor being connected to a printed circuit pattern on a printed circuit board, and the outer surface of the resistor.

5. The power supply circuit of claim 1, wherein the power supply circuit is free of any dedicated heat-sinking structure for said resistor whose heat-removal capacity exceeds that of leads of said resistor being connected to a printed circuit pattern on a printed circuit board, and the outer surface of the resistor.

6. The power supply circuit of claim 1, wherein:
(a) said lamp is a low pressure discharge lamp contained within a resonant ballast circuit; and
(b) a half-bridge switching network for supplying bi-directional power to said resonant ballast circuit.

7. The power supply circuit of claim 6, wherein said load draws less than an average of about 40 watts of power.

8. The power supply circuit of claim 7, wherein said resistor is rated no greater than about ½ watt.

9. The power supply circuit of claim 6, wherein said load draws less than an average of about 20 watts of power.

10. The power supply circuit of claim 9, wherein said resistor is rated no greater than about ¼ watt.
